# EUROPEAN PATENT APPLICATION

(11) **EP 1 271 376 A2**
(43) Date of publication of application: **02.01.2003**
(21) Application number: 02013710.5
(22) Date of filing: 20.06.2002
(51) Int. Cl.: G06F 17/60

(54) **Customer search device, system and method**

(30) Priority: 28.06.2001 JP 2001195853
(71) Applicant: Pioneer Corporation, Meguro-ku, Tokyo (JP); Increment P Corporation, Tokyo (JP)
(72) Inventor: Igarashi, Kaoru, c/o Increment P Corporation, Meguro-ku, Tokyo (JP)
(74) Representative: Betten & Resch

(57) **Abstract**

A customer search device is provided, that is able to conduct a search taking into account a customer's range of activities. The customer search device includes a storage unit for storing each customer's route of travel. The customer search device also includes a search criteria entry unit for receiving search criteria, including location information. A determination unit determines whether or not there is an association between the route of travel stored in the storage unit and the location information included in the search criteria. An output unit creates and outputs list data of customers whose route of travel has an association with the location information included in the search criteria, on the basis of a determination made by the determination unit.

## Description

### BACKGROUND OF THE INVENTION

### 1. Field of the Invention

The present invention relates to a customer search device, system and method based on a customer's route of travel.

### 2. Description of the Related Art

Systems for creating a database by collecting personal information such as sex and age of customers who own terminals (e.g., mobile (or cellular) phones and personal computers) are known in the art. Such systems utilize the database to search for customers who match search criteria. For example, when calling for participants for a particular event, a search of the database confined to a particular age group is carried out, and invitations are sent by email to the terminals of customers chosen by the search results.

However, in conventional systems able to search for customers who match search criteria in this way, a difficulty arises when one wishes to do a customer search restricted to a specific area. Since it is usual to carry qout a search based on customers' addresses, the customer's range of activities is not considered, and satisfactory search results are not obtained.

### SUMMARY OF THE INVENTION

An object of the present invention is to provide a customer search device, system and method for conducting a search that takes into account a customer's range of activities.

According to a first aspect of the present invention, there is provided a customer search device comprising: a storage unit for storing each customer's route of travel; a search criteria entry unit for receiving search criteria, including location information; a determination unit for determining whether or not there is an association between each of the routes of travel stored in the storage unit and the location information included in the search criteria; and an output unit for creating and outputting list data of customers whose routes of travel have an association with the location information included in the search criteria, on the basis of determinations made by the determination unit.

The search is conducted using each customer's route of travel. This means that the search takes into account the range of a customer's activities.

According to a second aspect of the present invention, there is provided a customer search system comprising: a storage unit for storing routes of travel for customers who have terminals; a search request unit for directing search criteria, including location information; a determination unit for determining whether or not there is an association between each of the routes of travel stored in the storage unit and the location information included in the search criteria; and an output unit for creating list data of customers whose routes of travel have an association with the location information included in the search criteria, on the basis of determinations made by the determination unit, and outputting this list data to the search request unit.

The search is conducted using each customer's route of travel. In other words, the search takes into account the range of a customer's activities.

According to a third aspect of the present invention, there is provided a customer search method comprising the steps of: A) storing each customer's route of travel; B) entering search criteria, including location information; C) determining whether or not there is an association between each of the routes of travel stored in Step A and the location information included in the search criteria; and D) creating and outputting list data of customers whose routes of travel have an association with the location information included in the search criteria, on the basis of determinations made in Step C.

Since the search is conducted using each customer' s route of travel, it can be said that the search takes into account the range of a customer's activities.

### BRIEF DESCRIPTION OF THE DRAWINGS

Fig. 1 is a diagram schematically showing a customer search system according to an embodiment of the present invention;
Fig. 2 shows the sequence of operations performed by servers and terminal of the search system shown in Fig. 1;
Fig. 3 shows an example of a registration application page display;
Fig.4 shows an example of a questionnaire page display; and
Fig. 5 is a flowchart showing customer search operations.

### DETAILED DESCRIPTION OF THE INVENTION

An embodiment of the present invention will be described in detail below, with reference to the accompanying drawings.

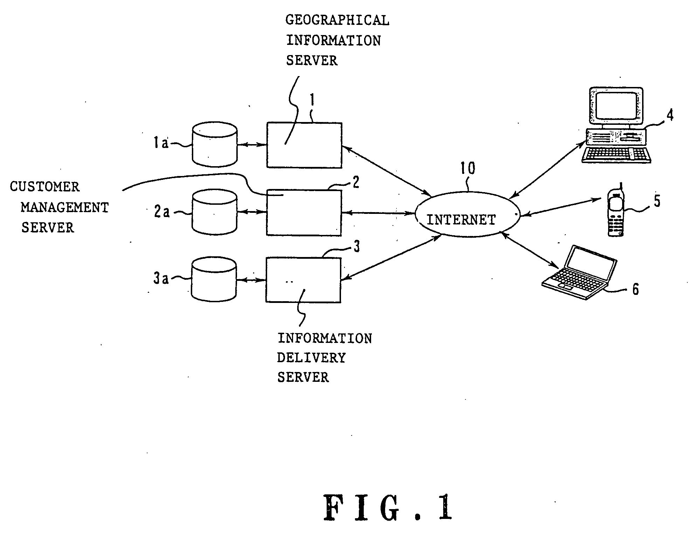

Referring to Fig. 1, is illustrated an outline of the composition of a customer search system according to an embodiment of the present invention.

As shown in Fig. 1, the customer search system includes a geographical (map) information server 1, a customer management server 2, an information delivery (distribution) server 3 and terminals 4 through 6. These components are able to be connected to each other through the internet 10. TCP/IP is used as the telecommunications protocol between the servers, between the terminals, and between the servers and the terminals.

Each of the geographical information server 1, the customer management server 2, and the information delivery server 3 is primarily constituted by a computer (server computer), and has a storage device 1a, 2a, 3a for forming a database therein.

The geographical information server 1 provides geographical data (map data). The geographical data is stored in the storage device 1a in advance as a database. The customer management server 2 fixes (decides, sets) a route of travel for each of the customers, and stores the route of travel, together with customer's personal information, in the storage device 2a in advance as a database. In the database of the storage device 2a, a storage area is formed for each customer's name. The customer management server 2 uses this database to search for customers corresponding to particular search criteria. The information delivery server 3 is located in places such as shops and public agencies, and delivers information using customers' personal information obtained by the customer management server 2.

The terminal 4 is a fixed terminal such as a desk-top personal computer in this embodiment. The terminal 5 is a mobile phone (cellular phone) having an internet connection function. The terminal 6 is a mobile terminal such as a small notebook-type (or lap-top type) personal computer. It should be noted that any type of devices may used as the terminals 4 through 6 as long as they have functions to connect to the internet and receive emails. Further, the terminals 4 through 6 may have fixed users or may be able to be used by unspecified users.

It should also be noted that the customer search system is not limited to including only the terminals 4 through 6, but may include numerous terminals not shown in the drawings.

In the customer search system having such a structure, it is necessary to register customer's own information in the storage device 2a of the customer management server 2 in order for a customer to receive each type of information. The customer's own information includes the customer's route of travel. The route of travel is the route that the customer uses for regular travel, mostly on a daily basis. For example, it may be the route used to commute to work or school.

Next, the operations required for the customer to carry out customer information registration using the terminal 4 will be described.

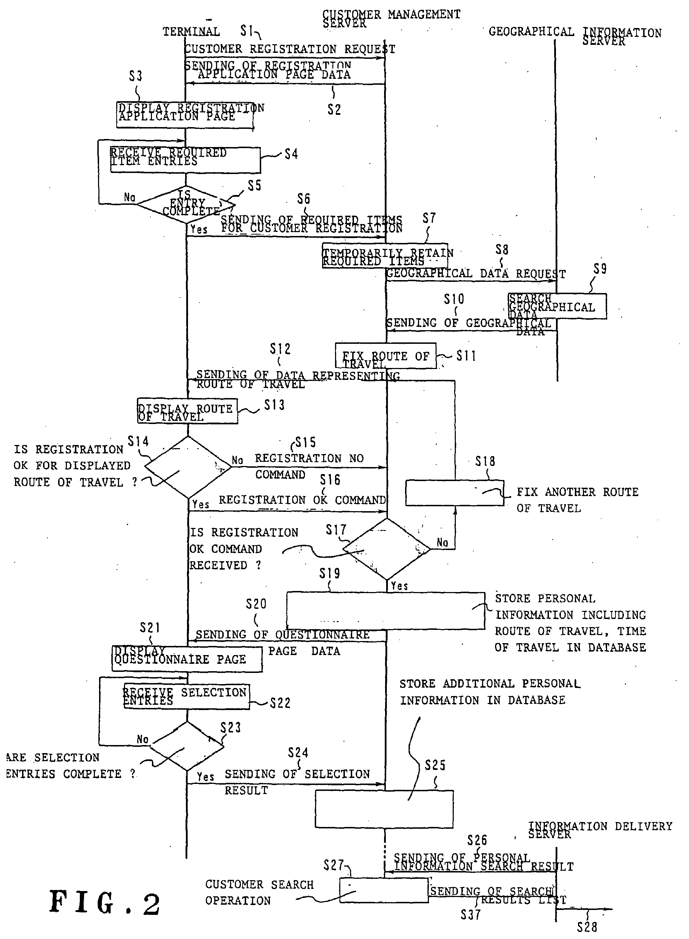

Referring to Fig. 2, when the terminal 4 is connected to the internet 10, the terminal 4 executes software for a WWW browser and sends a customer registration request to the customer management server 2 (Step S1) This customer registration request is specified by a particular URL (Uniform Resource Locater).

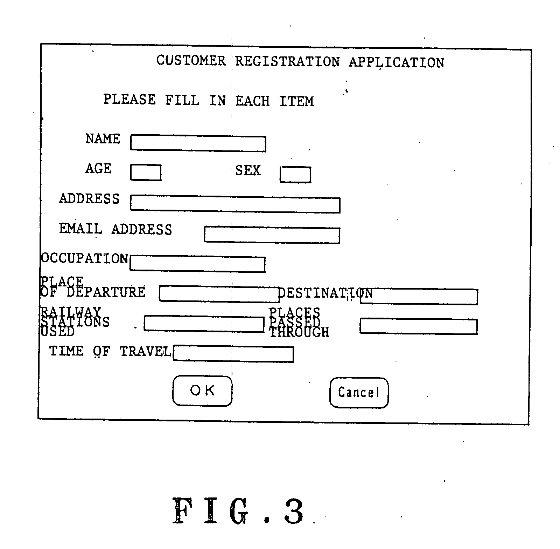

The customer management server 2 answers the customer registration request and sends registration application page data (Step S2). The registration application page data is data for forming an image on the WWW browser, as shown in Fig. 3, so that customers can enter the required items for customer registration. As illustrated, the items required for customer registration include name, age, sex, address, occupation, email address, place of departure, destination, railway stations used, places passed through, and time of travel in a day.

When the terminal device 4 receives the registration application page data, the image corresponding to this registration application page data is shown on the display through the WWW browser (Step S3). The customer looks at the image displayed in the screen and enters the required items (information, data) for customer registration using a keyboard. The terminal 4 receives these entries (Step S4) and determines whether or not the entry of items necessary for customer registration is complete (Step S5). If the entry of items necessary for customer registration is complete, the terminal 4 sends the entered registration data to the customer management server 2 (Step S6).

When the customer management server 2 receives the items necessary for customer registration, it temporarily retains them (Step S7) and then sends a geographical data request to the geographical information server 1 to request the area's geographical data including a customer's place of departure and destination (Step S8). The place of departure and destination data is included in the geographical data request.

When the geographical information server 1 receives the geographical data request, it searches (refers to) the geographical database formed in the storage device 1a and reads the geographical data corresponding to the place of departure and destination included in the geographical data request (Step S9). Then, it sends the retrieved geographical data to the customer management server 2 (Step S10).

When the customer management server 2 receives the geographical data from the geographical information server 1, it calculates and fixes (decides, sets) the customer's route of travel based on the items included in the geographical data, such as road systems, railway lines, the place of departure, destination, railway stations used, and places passed through (Step S11). The data showing the fixed route of travel is sent from the customer management server 2 to the terminal 4 (Step S12).

When the terminal 4 receives this data showing the route of travel, it displays an image showing the route of travel on the display, through the WWW browser (Step S13). If the displayed route of travel is the same as a desired route, the customer presses (clicks, touches, selects) an "OK" button for example, that is provided on the screen of the display unit. Pressing the "OK" button directs registration for the route of travel that is displayed. On the other hand, if the displayed route of travel is not the same as the desired route, the customer operates a "NO" button for example, that is provided on the screen of the display unit.

The terminal 4 determines which button, either the "OK" or "NO" button, is pressed by the customer (Step S14), in order to determine whether an appropriate route of travel is displayed. If the "NO" button has been operated, a registration NO command is sent to the customer management server 2 (Step S15). Although not shown in the drawings, the customer makes a correction to a part of the displayed route of travel that does not match the desired route, and/or adds something to the displayed route of travel (e.g., a place to be passed through) when the customer selects the "NO" button. Such corrected route of travel is sent to the customer management server 2 together with the registration NO command. If the "OK" button is operated, on the other hand, a registration OK command is sent to the customer management server 2 (Step S16).

The customer management server 2 determines whether the command that it has received is the registration NO command or OK command (Step S17). If the customer management server 2 receives the registration NO command, it calculates and fixes (decides) a new route of travel based on the travel route setting criteria it has obtained up to that point as well as the information received from the terminal 4, such as information as to the places to be passed through (Step S18). After executing Step S18, the program proceeds to Step S12 and repeats the above-mentioned operations . On the other hand, if the customer management server 2 receives the registration OK command, it stores the final route of travel fixed under Step S11 or Step S18 together with other personal information of the customer including name and email address in the database of the storage device 2a (Step S19). Accordingly, the personal information of the customer who has operated the terminal 4 is registered.

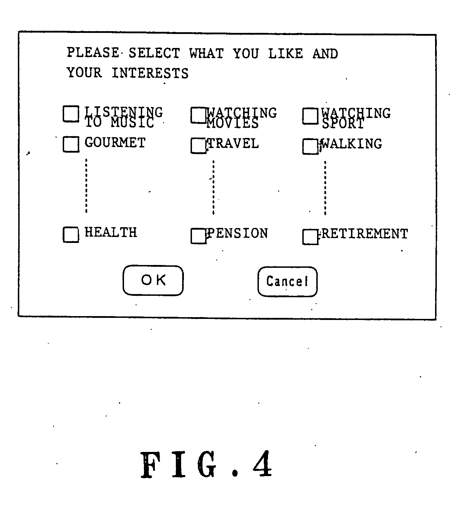

In addition, the customer management server 2 sends questionnaire page data (Step S20). The questionnaire page data is data for forming an image through the WWW browser to allow a customer to select his/her hobbies and preferences . This image is composed as in Fig. 4, for example, so that the customer can tick to select one or more items from the presented items such as listening to music, watching movies, watching sport, gourmet, travel, and walking.

When the terminal 4 receives the questionnaire page data, it shows an image corresponding to this questionnaire page data on the display, through the WWW browser (Step S21). The customer views the image shown on the display and enters his or her choice(s) from the listed items using the keyboard or a mouse. The terminal 4 receives these selection entries (Step S22) and determines from the operation of an "OK" button whether or not the entries have been completed (Step S23). If the selection entries have been completed, the selection results received by the terminal 4 are sent to the customer management server 2 (Step 24).

When the customer management server 2 receives the selection results from the terminal 4, it stores the selection results, in other words additional personal information, in the database of the storage device 2a (Step S25). In the storage device 2a, the additional personal information is entered into the storage area on the database corresponding to the customer's name.

In this manner, each customer's personal information is registered by the above described customer registration operation. It should be noted that the customer is informed that he or she may receive various emails after the customer registration. If the customer does not want to have such unadvised or abrupt emails, he or she can interrupt the customer registration. The customer registration will be complete only when confirmation of the customer's consent is obtained.

If there is information that needs to be delivered, the information delivery server 3 sends a personal information search request to the customer management server 2 (Step S26). The personal information search request is a request that the database be searched to determine the delivery destination of the information. The search criteria in the personal information search request include at least location information, but may also include other search criteria such as sex, age, and occupation. The location information indicates, for example, the area to which information is to be delivered.

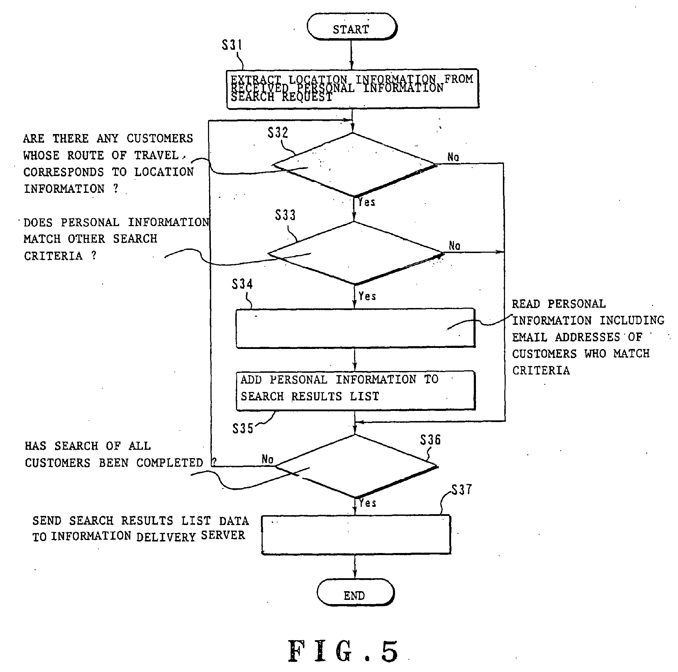

When the customer management server 2 receives the personal information search request, it begins a customer search operation (Step S27). As shown in Fig. 5, location information is extracted from this personal information search request (Step S31) and it is determined whether or not any customers exist whose route of travel corresponds to the location information (Step S32). More specifically, it is determined whether or not a route of travel that is associated with the area indicated in/by the location information exists in each customer's personal information stored in the storage device 2a. The route of travel that corresponds to the location information does not have to include the area indicated by the location information within the route of travel itself; it may be a route of travel that extends in the vicinity of the area indicated by the location information. The route of travel is considered to be a route of travel corresponding to the location information if there is some kind of association between the route of travel and the location information.

If there is a customer whose route of travel corresponds to the location information, it is then determined whether or not the personal information of this customer matches other search criteria (Step S33). More specifically, if there are search criteria in the personal information search request other than location information (for example age, sex), it is determined whether or not the personal information of the customer whose route of travel corresponds to the location information also matches the other search criteria.

If there is a customer whose personal information matches the other search criteria included in the personal information search request, the personal information of this customer, including his or her email address, is retrieved (read) (Step S34) and is added to a search results list (Step S35). It should be noted that the personal information included in the search results list may only be the email address.

Following the execution of Step S35, it is determined whether or not searches have been conducted on all customers registered in the database formed in the storage device 2a (Step S36). If all searches have not been completed, the program returns to Step S32 to repeat the above-mentioned operations.

When all searches have been completed, the search results list is sent to the information delivery server 3 (Step S37). The search results list may include more than one email address.

When the information delivery server 3 receives the search results list, it sends an email to each of the email addresses included in the search results list containing the information to be delivered (Step S28).

The emails are forwarded to those terminals which have the email addresses attached to (contained in) the emails through the internet 10. The terminals are operated by the customers who are designated by their email addresses attached to the emails. For example, if it is the terminal 4 in Fig. 1, the contents of the delivered information is shown on the display of the terminal 4.

Concrete examples of the application of the present invention will be described. If a certain company plans an event aimed at students, that company searches the database to determine railway stations used by students and the time of travel of the students, and obtains information about the stations most used by students and the most common time of travel. When a department store plans a bargain sale and wants to notify customers of bargain sale information by email, the department store searches customers who use the closest station to the store, and based on the search results list, the department store can send emails to these customers giving information about the bargain sale. The present invention can also be used to search for witnesses to accidents and criminal offences. Specifically, the police searches the database using the area where the accident or incident has happened as location information, and the time of travel as an additional search criterion. The police can then send emails to search for witnesses based on the search results list.

It should be noted that the manner for fixing the route of travel from a customer's place of departure to his/her destination is not limited to that shown in Fig. 2. For example, the route fixing method disclosed in Japanese Patent Kokai (Laid-open publication) No. 2001-91292 may also be used, the entire disclosure of which is incorporated herein by reference.

Further, a customer's personal information does not have to be registered in the customer's management server 2 by data transmission from the customer's terminal. For instance, the customer's personal information may be registered by an operator who operates the customer management server 2. The operator enters information/data into the storage device 2a of the customer management server 2 after the operator receives the information from the customer by mail, fax or phone.

## Claims

1. A customer search device comprising:
a storage unit for storing a route of travel of each customer;
a search criteria entry unit for receiving search criteria, including location information;
a determination unit for determining whether or not there is an association between each customer's route of travel stored in said storage unit and the location information included in said search criteria; and
an output unit for creating and outputting list data of customers whose routes of travel have an association with the location information included in said search criteria, on the basis of determinations made by said determination unit.

2. The customer search device according to Claim 1 further including a travel route setting unit for calculating and setting the each customer's route of travel in accordance with a place of departure and destination designated by each customer and geographical data, and storing the route of travel thus set in said storage unit.

3. The customer search device according to Claim 1 or 2, wherein said search criteria entry unit receives said search criteria from an information delivery server that delivers information, and said output unit sends said list data to said information delivery server.

4. The customer search device according to one of the preceding Claims, wherein said storage unit stores each customer's personal information including each customer's route of travel, and said output unit uses the personal information in said storage unit to search for customers who meet search criteria other than said location information, among those customers whose routes of travel have an association with the location information included in said search criteria, and creates said list data on the basis of search results.

5. The customer search device according to Claim 4, wherein said each customer's personal information includes the time of day that the customer travels on its route of travel.

6. A customer search system comprising:
a storage unit for storing a route of travel of each customer who has a terminal;
a search request unit for directing search criteria, including location information;
a determination unit for determining whether or not there is an association between each customer's route of travel stored in said storage unit and the location information included in said search criteria; and
an output unit for creating list data of customers, on the basis of determinations made by said determination unit, whose routes of travel have an association with the location information included in said search criteria, and outputting the list data to said search request unit.

7. The customer search system according to Claim 6, wherein said search request unit has an email transmission unit for delivering emails to customers' terminals in accordance with said list data.

8. The customer search system according to Claim 6 or 7 further including a travel route setting unit for calculating and setting the each customer's route of travel in accordance with a place of departure and destination designated by each customer and geographical data, and storing the route of travel thus set in said storage unit.

9. The customer search system according to one of Claims 6 to 8, wherein said storage unit stores each customer's personal information including each customer's route of travel, and said output unit uses the personal information in said storage unit to search for customers who meet search criteria other than said location information, among those customers whose routes of travel have an association with the location information included in said search criteria, and creates said list data on the basis of search results.

10. The customer search system according to Claim 9, wherein said each customer's personal information includes the time of day that the customer travels on its route of travel.

11. A customer search method comprising the steps of:
A) storing a route of travel of each customer;
B) accepting search criteria, including location information;
C) determining whether or not there is an association between each customer's route of travel stored in Step A and the location information included in said search criteria; and
D) creating and outputting list data of customers whose routes of travel have an association with the location information included in said search criteria, on the basis of determinations made in Step C.

12. The customer search method according to Claim 11 further including the step of calculating and setting the each customer's route of travel in accordance with a place of departure and destination designated by each customer and geographical data before Step A, and wherein Step A stores the route of travel thus set.

13. The customer search method according to Claim 11 or 12, wherein Step B accepts said search criteria from an information delivery server, and Step D outputs said list data to said information delivery server.

14. The customer search method according to one of Claims 11 to 13, wherein Step A stores each customer's personal information including each customer's route of travel, and Step D uses the personal information in said storage unit to search for customers who meet search criteria other than said location information, among those customers whose routes of travel have an association with the location information included in said search criteria, and creates said list data on the basis of search results.

15. The customer search method according to Claim 14, wherein said each customer's personal information includes the time of day that the customer travels on its route of travel.
